# EUROPEAN PATENT SPECIFICATION

(11) **EP 3 153 718 B1**
(45) Date of publication and mention of the grant of the patent: **04.05.2022**
(21) Application number: 16191370.2
(22) Date of filing: 29.09.2016
(51) Int. Cl.: F16B 12/20, A47B 91/02, A47B 96/06

(54) **JOINING DEVICE WITH COMPACT LEVELLER FOR PARTS OF FURNITURE AND FURNISHING ITEMS**
KOMPAKTER HÖHENVERSTELLBARE VERBINDUNGSVORRICHTUNG FÜR MÖBELN UND MÖBELTEILEN.
DISPOSITIF D'ASSEMBLAGE COMPACT POUR DES PIÈCES DE MEUBLE ET DES ARTICLES D'AMEUBLEMENT

(30) Priority: 09.10.2015 IT UB20154259
(43) Date of publication of application: 12.04.2017
(73) Proprietor: Leonardo S.r.L., 22060 Figino Serenza (CO) (IT)
(72) Inventor: CATTANEO, Carlo, 22060 Figino Serenza (CO) (IT)
(74) Representative: Franco Martegani S.r.l.

(56) References cited:
- EP-A1- 0 503 701
- WO-A1-92/03663
- WO-A1-2009/056935
- DE-A1- 2 701 871

## Description

The present invention relates to a joining device with a compact leveller for parts of furniture and furnishing items.

The joining between two panels, for example between a shoulder of a piece of furniture and a base, or in any case a shelf, is currently effected in the furniture and furnishing field using various procedures and with different solutions.

Examples of these solutions are known for example from patents US7494297, US5567081, US6547477 and US4408923.

For example, the document WO92/03663 discloses a securing device for use in the construction of pieces of furniture which comprises a horizontal panel having an edge face which butts against a major face of a vertical panel, a member for supporting the weight of the piece of furniture, the device comprising a base having on its underside a mounting for, or at least a part of, said member, the upper side of the base being adapted to engage in and support said horizontal panel, and said base being provided with one part of a two part securing means, the other part of said securing means being adapted for engagement in said major face of said vertical panel, said securing means being operable to draw said base towards said vertical panel whereby in use to both secure said base to the vertical panel and to rigidly secure said horizontal panel in position relative to said vertical panel.

These known solutions have a certain complexity and in any case have a certain visibility, as they require closing elements of the seats or holes necessary for positioning the elements that effect the joining.

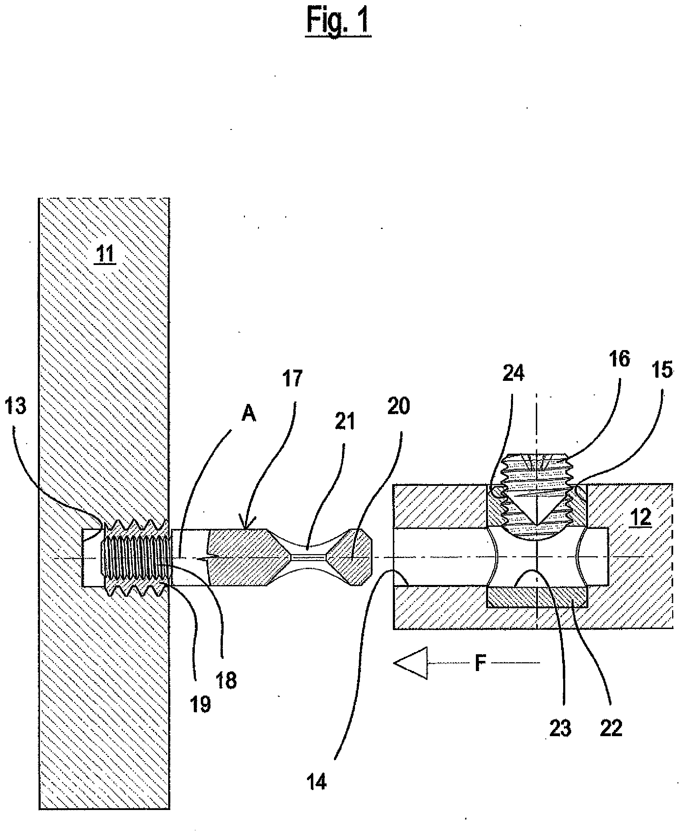

Much more simply, figures 1, 2 and 3 show a known solution of a joining device for parts of furniture and furnishing items, for example between a shoulder of a piece of furniture and a base, or in any case a shelf.

In the known solution illustrated, holes must be provided in both a shoulder 11 and a base 12 of a piece of furniture, both partially shown in a connection part of the same. The shoulder 11, in fact, provides a horizontal blind hole 13 and the base 12 even provides a double hole 14, 15. More specifically, a horizontal hole 14 to be aligned with the hole 13 of the shoulder 11, and a vertical hole 15, formed in the upper surface of the base 12, which intersects the first hole 14, for the insertion of a blocking element, for example a grub screw 16, wherein both holes are blind.

Said hole 13 has an axis A which is perpendicular to the shoulder 11.

This known joining device provides the positioning of a pin 17 with a first threaded end 18 inside an internally threaded bush 19 positioned i the hole 13 of the shoulder 11. The pin 17 contains, at the other end 20, a housing 21 for an end of the grub screw 16.

A bush 22 is housed in the vertical hole 15 of the base 12, which provides a horizontal pass-through hole 23 for receiving the protruding end 20 of the pin 17 and a vertical threaded pass-through hole 24 which receives the grub screw 16.

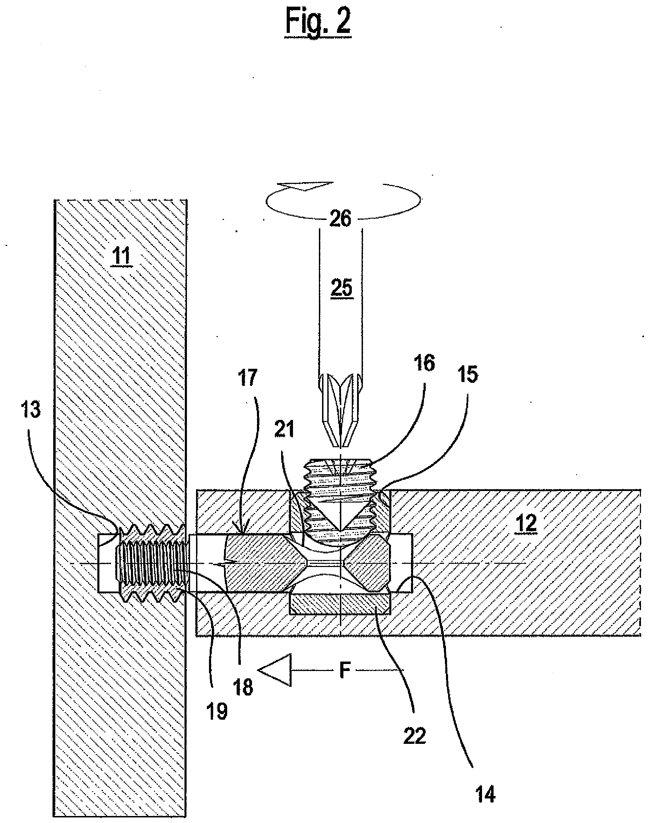

By thus positioning said elements forming the known joining device and juxtaposing the shoulder and the base according to the arrow F of figure 1, the coupling of figure 2 is obtained, with the pin 17 inserted in the hole 14 of the base 12 and in the bush 22.

The grub screw 16 is then screwed, with a tool 25, according to the arrow 26, into the bush 22 so that the tip of the grub screw 16 is positioned in the housing 21 provided at the free end 20 of the pin 17.

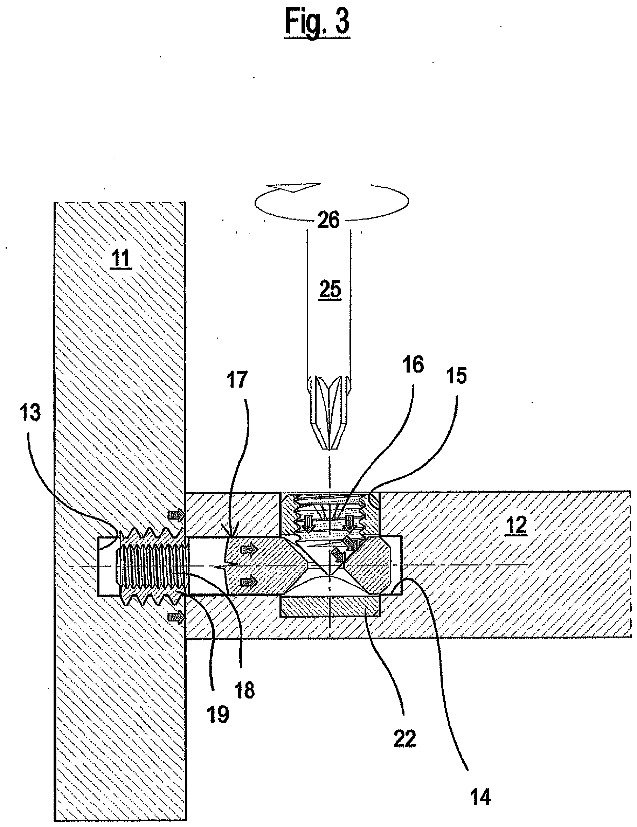

The tightening of the grub screw 16 pushes the base 12 against the shoulder 11 forming the final stable position shown in figure 3.

In this known solution, the blocking group is in the base, it is arranged perpendicular to the base and to the movement or approach direction and tightening between the shoulder and base. Only the pin, with which the blocking group cooperates, is provided in the thickness of the shoulder or side panel.

Said figure 3 indicates, by means of a series of arrows, the scheme of forces at play between the shoulder 11 and base 12 of the piece of furniture and between the parts of the joining device.

This final position also shows how the end of the hole 15 is present on the upper surface of the base 12, and is normally covered with a closing cap (not shown).

Said hole and the corresponding cap form a visible part of the joining device.

In the first place, this part does not have an aesthetically valid appearance as, although there is the presence of the cap, it shows how the joining has been effected. Furthermore, the cap itself, which is difficult to be brought specifically in line with the surface of the base, represents an obstacle for the insertion of any object, creating a protrusion, even if minimum, with respect to the upper surface of the base.

Furthermore, the presence of at least two holes in the base, intersecting each other, causes a weakening of the base itself that must sustain loads representing a possible cause of breakage.

A further problem that arises in the known devices relates to the levelling. In order to effect this, a levelling device must be associated with the joining device, with significant encumbrance and complexity for a correct application.

The general objective of the present invention is to provide a joining device between parts of furniture and furnishing items, such as a shoulder and a base, capable of solving the drawbacks mentioned above of the known art, in an extremely simple, economical and particularly functional manner.

A further objective of the present invention is to provide a joining device between parts of furniture and furnishing items, such as a shoulder and a base, which is not visible to an observer and therefore has a high aesthetical value

Another objective of the present invention is to provide a joining device between parts of furniture and furnishing items, such as a shoulder and a base, which does not have any protrusion with respect to the upper surface of the base.

Yet another objective of the present invention is to provide a joining device which also allows a levelling operation, simplifying its assembly and which is particularly compact with respect to its encumbrance.

The structural and functional characteristics of the present invention are defined in claim 1. The advantages with respect to the known art will appear more evident from the following description, referring to the enclosed schematic drawings which show embodiment examples of the same invention. In the drawings:
- figure 1 is a sectional view illustrating parts, spaced from each other, of a known joining device for parts of furniture and furnishing items, for example between a shoulder of a piece of furniture and a base or in any case a shelf;
- figures 2 and 3 are two sectional views of the known device of figure 1, wherein figure 2 shows said parts juxtaposed with respect to each other and partially inserted in each other and figure 3 shows said parts completely inserted in each other and tightened;
- figures 4 and 5 are a sectional view and a perspective view with extremely schematic exploded parts of a joining device with a compact coaxial leveller according to the present invention;
- figure 6 is a sectional view illustrating parts, spaced from each other, of a joining device with a compact leveller for parts of furniture and furnishing items, for example between a shoulder of a piece of furniture and a base or in any case a shelf, according to the invention in a non-limiting embodiment;
- figure 7 is a sectional view of the device of figure 6, with said parts juxtaposed and partially inserted in each other to effect a first assembly action;
- figure 8 is a sectional view of the device of figure 6 with said parts completely inserted in each other and tightened;
- figure 9 is a sectional view of the device of figure 6 with parts completely inserted in each other and tightened with a screwdriver which effects a levelling action.

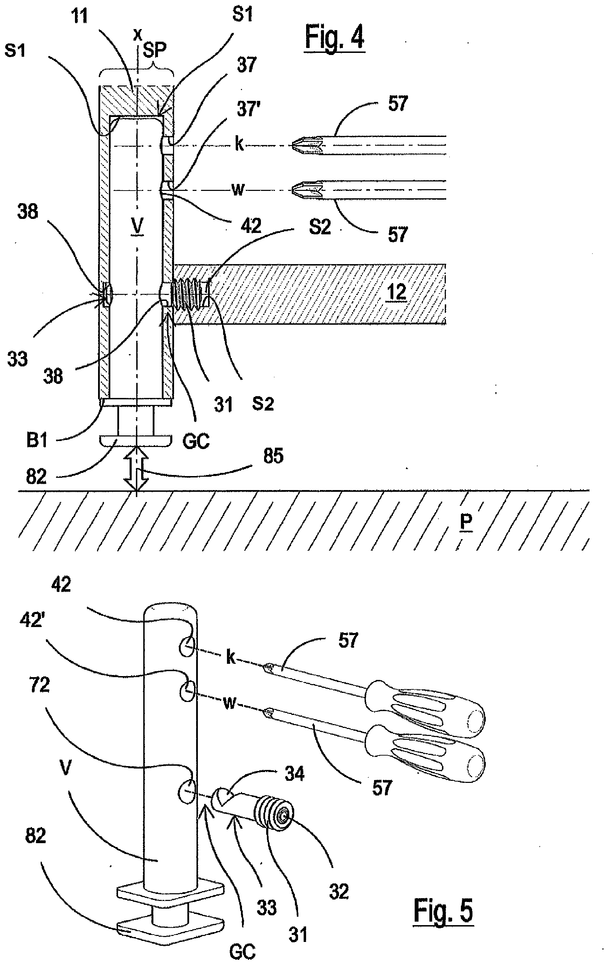

With reference first of all to figures 4 and 5, these schematize a joining device with a compact coaxial leveller for parts of furniture or furnishing items of the invention, provided with a pair of side holes which allow both the connection and tightening operations between the parts and also the levelling with respect to an underlying floor, to be effected.

In particular, figure 4 indicates how the joining device must connect and join a first panel 11, for example a shoulder of a piece of furniture, and a second panel 12, for example a base, or in any case a panel or shelf, partially shown. In the example, the shoulder 11 and the base or panel 12 are shown to be perpendicular to each other but they may also be tilted with respect to each other.

The base 12 contains, at one of its ends, a seat S2, in the form of a horizontal blind hole in which an internally threaded bush 31 is positioned, blocked, for receiving a threaded end 32 of a pin 33.

The pin 33 provides, in its protruding part, a housing 34 for the tip of a blocking grup screw (not shown in figures 4 and 5).

The pin 33 defines a connection group GC to be firmly blocked for stably interconnecting said shoulder 11 and said base 12.

The shoulder 11 provides a seat S1,- for a blocking group GB (not shown in figures 4 and 5) -, having a substantially elongated configuration, in the form of a vertical blind hole which intersects a first, a second and a third horizontal blind hole 37, 37', 38, respectively, spaced from each other.

Said seat S1, characteristically extends from a perimetric edge B1 towards the interior of said shoulder or panel 11.

The example of figures 4 and 5 very schematically shows a joining device with a coaxial leveller having minimum encumbrance according to the present invention contained in a casing V.

The casing V contains (not shown) a blocking group GB, suitable for acting on the connection group GC, and also a levelling group GL which moves a supporting leg 82 extending towards an underlying floor P.

The casing V has a first hole 42 and a second hole 42' whereby, by passing through the same with the same tool such as a common Phillips screwdriver 57, the two groups are actuated. The same Phillips screwdriver 57 acts on a blocking group GC suitable for acting on the connection group GC, and in the same way also on a levelling group GL which moves the leg 82. The two holes 42, 42' are positioned on the same vertical line of the connection group GC. The casing V has a third hole 72 through which the pin 33 of the connection group GC passes.

The subsequent figures from 6 to 9 show an embodiment of a joining device with a compact leveller for pieces of furniture or furnishing items according to the invention.

The same elements are indicated with the same reference numbers as before when possible, also in this further example.

It can firstly be observed that there is an identical connection group GC with a pin 33.

An outer cylindrical casing divided into two half shells 39 and 40, is housed in the vertical hole or seat S1 for containing both a blocking group GB and a levelling group GL which are now described in greater detail for this example.

A second pair of half-shells 39', 40' forms a second internal cylindrical casing in which an upper part of the blocking group GB is housed. More specifically, a pinion-toothed crown bevel is housed in this second pair of half-shells 39', 40', which causes the downward sliding of a blocking grub screw 35.

A pinion 41 is in fact rotatingly positioned inside a hole 89 formed in a half-shell 40' which is aligned with the first horizontal hole 37 of the shoulder 11. The pinion 41 is engaged with a toothed crown 43, formed as head of a threaded screw 44, and can rotate in a seat 45 formed in the two coupled half-shells 39' and 40'. The threaded screw 44 is in turn positioned in a threaded axial hole 46 and inside the grub screw 35. The components 35, 41, 43, 46, define the blocking group GB suitable for acting on the above-mentioned connection group GC composed of the pin 33.

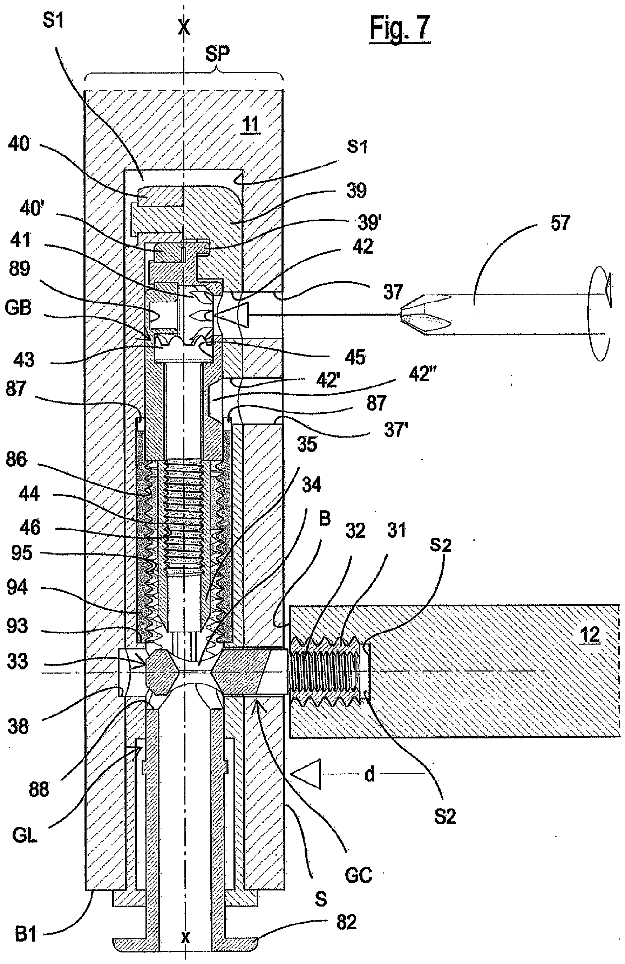

The Phillips screwdriver 57 is suitable for being inserted inside a complementary seat of the pinion 41 passing through the first hole 37 of the shoulder 11 (figure 7) so as to be coupled with the same to cause its rotation.

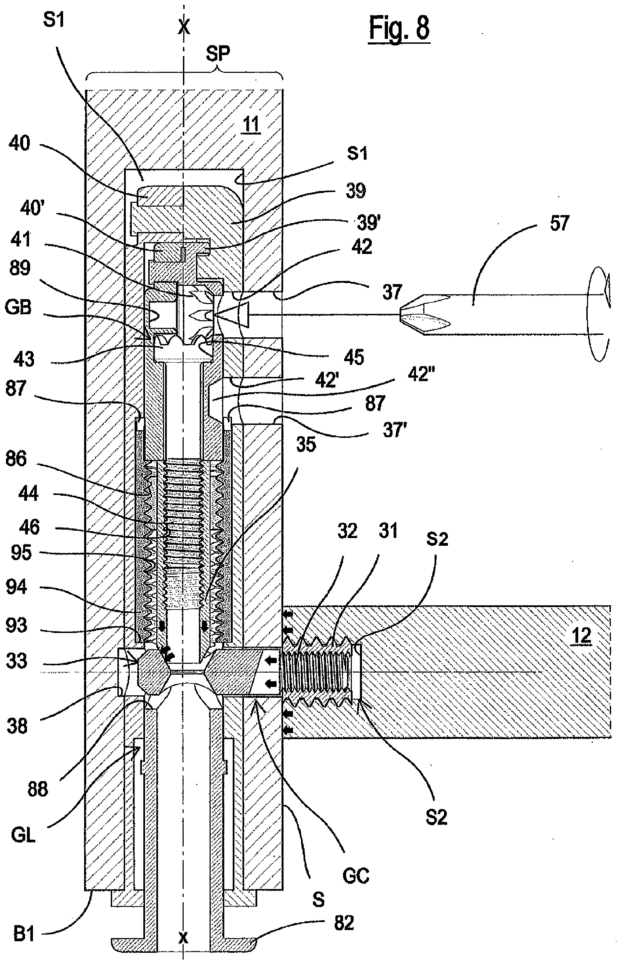

The rotation of the pinion 41 in turn causes the rotation of the toothed crown 43 of the head of the threaded screw 44. The rotation of the threaded screw 44 forces the downward movement of the grub screw 35 (figure 8).

It can be seen how, in this embodiment, the joining device with a leveller of the present invention essentially comprises the blocking group GB (35, 41, 43, 44, 46) inserted inside a seat S1 (or vertical hole) of the shoulder 11, which acts on a pin 33 connection group GC to be blocked, positioned inside the seat S2 of the base 12.

The blocking group GB is inserted in the seat S1 which is completely contained in the thickness SP of the shoulder or panel 11, wherein a longitudinal axis x of the seat S1 or hole extends from the edge B1 towards the interior perpendicular to an approach and tightening direction d of the base 12 with respect to the shoulder or panel 11. A maneuvering axis (k) of said blocking group GB is perpendicular to a regulation axis of the levelling group GL, wherein the regulation axis of the levelling group GL coincides with a movement axis x of the blocking group GB.

It can also be observed that a maneuvering axis w of the levelling group GL is perpendicular to a regulation axis of the levelling group GL, wherein the regulation axis of the group GL coincides with a movement axis x of the blocking group GB.

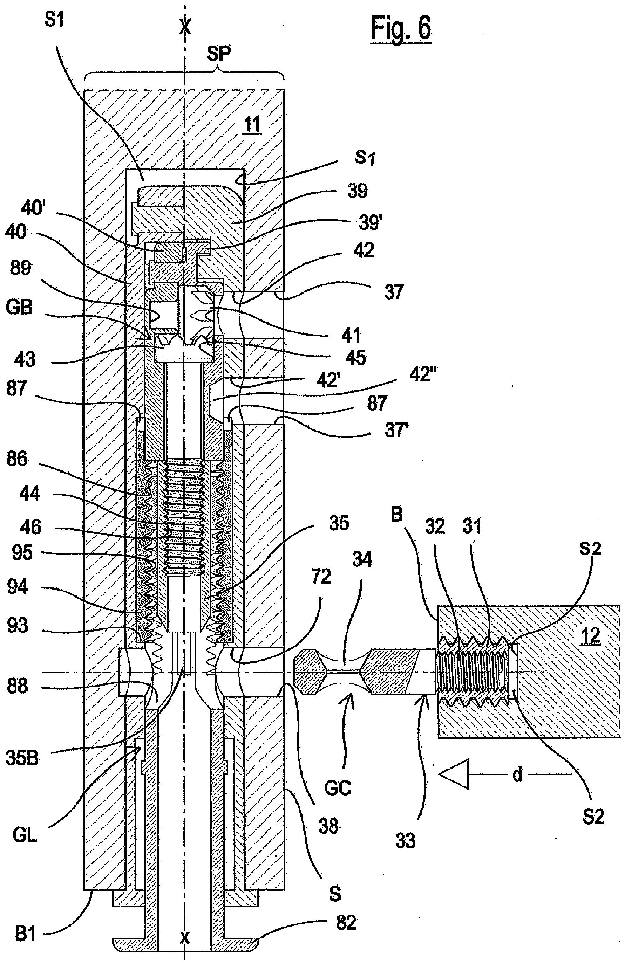

Figures 6 to 8 show how parts of the joining device according to the present invention are positioned by placing the two half-shells 39 and 40 in the hole or seat S1 of the shoulder 11 and the pin 33 in the hole or seat S2 of the base 12 (figure 6).

The edge B of the base 12 is then moved towards the surface S of the shoulder 11, inserting the protruding part of the pin 33 into the second horizontal hole 38 of the shoulder 11 (figure 7).

The screwdriver 57 is subsequently inserted in the complementary seat of the pinion 41, passing through the first hole 37 of the shoulder 11 so as to cause the rotation of the pinion 41. The rotation of the pinion 41 causes the rotation of the toothed crown 43 of the head of the threaded screw 44. This rotation forces the downward movement of the grub screw 35, provided with anti-rotation means, which is thus engaged inside the housing 34 of the pin causing the tightening between the shoulder 11 and base 12 (figure 8) with a stable connection.

Figure 8 indicates, by means of a series of arrows, the scheme of forces at play between the shoulder 11 and base 12 of the piece of furniture, with the actuation of the blocking group GB of the joining device.

As already indicated, not only the blocking group GB described above, but also the levelling group GL described hereunder, are housed in the two half-shells 39, 40.

A cylindrical element 94 is, in fact, positioned inside the two outer half-shells 39, 40 in a housing, defined above by the bottom of the two internal half-shells 39', 40' and below by a radial annular abutment 93 positioned in said two outer half-shells 39, 40.

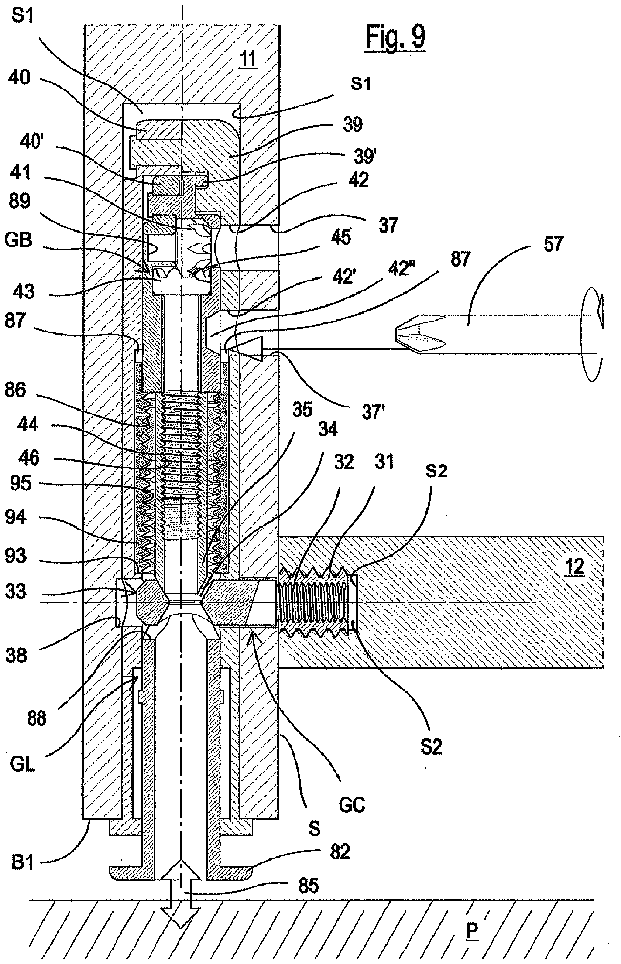

This cylindrical element 94 is provided with an internal threading 95 which is engaged with a complementary external threading 86 formed on the upper outer end of the body of the leg 82. The cylindrical element 94 also perimetrally provides an upper head toothing 87 that can be reached from the second hole 37' of the shoulder 11 and from the hole 42' of the outer half-shell 39 when the elements are assembled (figure 9).

The cylindrical element 94 at least partially surrounds an end portion of the internal casing 39', 40' and most of the grub screw 35.

Guiding grooves for the protruding anti-rotation teeth of the grub screw 35 are provided inside the body of the leg 82. Slots 88 for allowing the passage of the pin 33 are also formed in the body of the leg 82.

It is therefore clear that once the blocking of the base 12 to the shoulder 11 has been effected, as shown in figure 8 and as previously described, an adjustment can be effected by means of the levelling group GL.

As shown in figure 9, a Phillips screwdriver 57 is used, introducing it into the hole 37', then into the hole 42' of the outer half-shell 39 and into a groove 42" of the internal half-shell 39'.

This can therefore act to cause the rotation of the upper head toothing 87 and consequently the cylindrical element 94.

Said rotation causes the movement of the leg 82 according to the arrow 85 with an adjustment with respect to a floor P.

A joining device with a leveller according to the invention is therefore particularly compact and has a reduced encumbrance. Furthermore, due to the coaxial arrangement of the blocking group GB and the levelling group GL, the component pieces are minimized and there is a saving of materials.

Furthermore, the invention shows how the problem relating to the visibility of the device has been advantageously solved. The formation of the actuation area on the shoulder of the piece of furniture creates an aesthetically pleasing appearance.

Any possible caps positioned in the holes do not interfere with what is resting on the base of the furniture which is free of any type of hole.

In this way, there are no obstacles on the base for the insertion of any object, eliminating any type of protrusion, even if minimum, with respect to the upper surface of the base.

Holes produced on the shoulder are not particularly visible to an observer with respect to holes on the base as in the known art, thus obtaining a high aesthetical value.

Finally, the elimination of holes that intersect each other in the base eliminates any possible weakening of the base itself which can therefore sustain high loads without the danger of a possible cause of breakage of the base.

The separate regulation holes 37, 37' and 42, 42' of the blocking group GB and levelling group GL avoid any confusion in said adjustment by spacing the parts so as not to weaken them.

The same tool, such as a Phillips screwdriver, is advantageously used in the invention, in order to effect both the joining and the regulation of the supporting leg.

The forms of the structure for the production of a joining device of the present invention, as also the materials and assembly modes, can naturally differ from those shown for purely illustrative and non-limiting purposes in the drawings.

The objectives mentioned in the preamble of the description have therefore been achieved.

The protection scope of the present invention is defined by the enclosed claims.

## Claims

1. A joining device suitable for a piece of furniture comprising at least two panels (11,12), said panels having seat (S1,S2) and said joining device having a compact leveller for parts of furniture and furnishing items, in particular between a first panel (11), such as a shoulder of a piece of furniture, and a second panel (12), such as a base or shelf of a piece of furniture, which must be moved towards each other according to an approach direction (d) in order to bring the edge (B) of one panel abutted in a tightening position against a surface (S) of the other panel, said joining device comprising a blocking group (GB) and a connection group (GC) assemblable on said panels (11,12), **characterized in that** a levelling group (GL) is also provided, insertable inside a same seat (S1) which receives the blocking group (GB), wherein said seat (S1) is contained in the thickness (SP) of the panel (11) in which the blocking group (GB) is applicable, said seat (S1) extending from an edge (B1) towards the interior of said panel (11,12) according to an axis (x) which is perpendicular to an approach direction (d) between said panels (11,12), said blocking group (GB) and said levelling group (GL) being manoeuvrable through two separate holes (42, 42'); the joining device comprising a casing (39',40') and a second outer casing (39,40);
wherein said blocking group (GB) comprises a pinion-toothed crown bevel (41,43), which is housed in said casing (39',40') inside said second outer casing (39,40), wherein said second outer casing (39, 40) is positioned in said seat (S1) in the form of a hole of said shoulder (11), wherein said bevel, which is accessible from a first hole holing (37) of said shoulder (11) and from a hole (42) of a half-shell (39) of said casing, controls the movement of a grub screw (35) suitable for being engaged on said connection group (GC);
wherein said levelling group (GL) comprises a leg (82);
wherein said levelling group (GL) is positioned in said second outer casing (39,40) and comprises a cylindrical element (94) provided with an internal threading (95) which engages with a complementary outer threading (86) formed on an upper outer end of said leg (82) extending towards a floor (P); and
wherein said connection group (GC) comprises a threaded end (32), an internally threaded bush (31) and a pin (33) , said pin being positioned in said threaded end (32), in said internally threaded bush (31), arranged in a hole or seat (S2) of said base (12), said pin (33) providing, in its protruding part, a housing (34) for a blocking grub screw (35) of said blocking group (GB).

2. The device according to claim 1, **characterized in that** said two separate holes (42,42') are produced in said casings (39, 40, 39' ,40').

3. The device according to claim 1, **characterized in that** said two holes (42,42') are positioned on the same vertical line as the connection group (GC).

4. The device according to claim 1, 2 or 3, **characterized in that** said blocking group (GB) and said levelling group (GL) can be manoeuvred with the same tool (57) .

5. The device according to any of the claims from 1 to 4, **characterized in that** a manoeuvring axis (k) of said blocking group (GB) is perpendicular to a regulation axis of the levelling group (GL), said regulation axis of the levelling group (GL) coinciding with a movement axis of the blocking group (GB).

6. The device according to any of the claims from 1 to 5, **characterized in that** said levelling group (GL) and said blocking group (GB) are positioned in the casing (39, 40, 39' ,40').

7. The device according claim 6, **characterized in that** a toothed crown (43) of said bevel extends into a threaded screw (44), which in turn is positioned in a threaded hole (46) axial to and inside said grub screw (35).

8. The device according to claim 1, **characterized in that** said cylindrical element (94) at least partially surrounds an end portion of said internal casing (39', 40') and said grub screw (35).

9. The device according to claim 1 or 8, **characterized in that** said cylindrical element (94) provides above, an upper head toothing (87) that can be reached from a second hole (37') of the first panel or shoulder (11) and from a hole (42') positioned in a half-shell of the outer casing (39).

10. The device according to claim 9, **characterized in that** said upper head toothing (87) can be reached not only from said second hole (37') of the first panel or shoulder (11) and from said hole (42') positioned in the outer half-shell (39), but also from a groove (42") of a half-shell of said internal casing (39').

11. The device according to claim 1, 8 or 9, **characterized in that** anti-rotation means are provided in said leg (82), which extend from the grub screw (35), and slots (88) are provided for allowing the passage of at least part of the connection group (GC).

## Patentansprüche

1. Fügevorrichtung, die für ein Möbelstück geeignet ist, das mindestens zwei Platten (11, 12) umfasst, wobei die Platten einen Sitz (S1, S2) aufweisen und die Fügevorrichtung eine kompakte Nivelliereinrichtung für Möbelteile und Einrichtungsgegenstände insbesondere zwischen einer ersten Platte (11), wie einer Schulter eines Möbelstücks, und einer zweiten Platte (12), wie einem Sockel oder einem Regal eines Möbelstücks, aufweist, die gemäß einer Annäherungsrichtung (d) aufeinander zu bewegt werden müssen, um den Rand (B) einer Platte in eine Spannposition gegen eine Fläche (S) der anderen Platte in Anlage zu bringen, wobei die Fügevorrichtung eine Blockiergruppe (GB) und eine Verbindungsgruppe (GC) umfasst, die an den Platten (11, 12) montierbar sind,
**dadurch gekennzeichnet, dass**
auch eine Nivelliergruppe (GL) vorgesehen ist, die in denselben Sitz (S1) einsetzbar ist, der die Blockiergruppe (GB) aufnimmt, wobei der Sitz (S1) in der Dicke (SP) der Platte (11) enthalten ist, in der die Blockiergruppe (GB) anwendbar ist, wobei sich der Sitz (S1) von einem Rand (B1) in Richtung des Inneren der Platte (11, 12) gemäß einer Achse (x) erstreckt, die senkrecht zu einer Annäherungsrichtung (d) zwischen den Platten (11, 12) ist, wobei die Blockiergruppe (GB) und die Nivelliergruppe (GL) durch zwei separate Löcher (42, 42') manövrierbar sind;
wobei die Fügevorrichtung ein Gehäuse (39', 40') und ein zweites Außengehäuse (39, 40) umfasst;
wobei die Blockiergruppe (GB) ein ritzelverzahntes Kegelrad (41, 43) umfasst, das in dem Gehäuse (39', 40') innerhalb des zweiten äußeren Gehäuses (39, 40) untergebracht ist, wobei das zweite äußere Gehäuse (39, 40) in dem Sitz (S1) in Form eines Lochs der Schulter (11) positioniert ist, wobei das Kegelrad, das von einer ersten Lochbohrung (37) der Schulter (11) und von einem Loch (42) einer Halbschale (39) des Gehäuses zugänglich ist, die Bewegung einer Madenschraube (35) steuert, die zum Eingriff mit der Verbindungsgruppe (GC) geeignet ist;
wobei die Nivelliergruppe (GL) einen Schenkel (82) umfasst;
wobei die Nivelliergruppe (GL) in dem zweiten äußeren Gehäuse (39, 40) angeordnet ist und ein zylindrisches Element (94) umfasst, das mit einem Innengewinde (95) versehen ist, das in ein komplementäres Außengewinde (86) eingreift, das an einem oberen äußeren Ende des Schenkels (82) ausgebildet ist, der sich zu einem Boden (P) hin erstreckt; und
wobei die Verbindungsgruppe (GC) ein mit einem Gewinde versehenes Ende (32), eine mit einem Innengewinde versehene Buchse (31) und einen Stift (33) umfasst, wobei der Stift in dem mit einem Gewinde versehenen Ende (32), in der mit einem Innengewinde versehenen Buchse (31), die in einem Loch oder Sitz (S2) der Basis (12) angeordnet ist, positioniert ist, wobei der Stift (33) in seinem vorstehenden Teil ein Gehäuse (34) für eine blockierende Madenschraube (35) der Blockiergruppe (GB) bereitstellt.

2. Vorrichtung nach Anspruch 1, **dadurch gekennzeichnet, dass** die beiden getrennten Löcher (42, 42') in den Gehäusen (39, 40, 39', 40') hergestellt sind.

3. Vorrichtung nach Anspruch 1, **dadurch gekennzeichnet, dass** die beiden Löcher (42, 42') auf der gleichen vertikalen Linie wie die Verbindungsgruppe (GC) angeordnet sind.

4. Vorrichtung nach einem der Ansprüche 1, 2 oder 3, **dadurch gekennzeichnet, dass** die Blockiergruppe (GB) und die Nivelliergruppe (GL) mit demselben Werkzeug (57) betätigt werden können.

5. Vorrichtung nach einem der Ansprüche 1 bis 4, **dadurch gekennzeichnet, dass** eine Manövrierachse (k) der Blockiergruppe (GB) senkrecht zu einer Regulierachse der Nivelliergruppe (GL) steht, wobei die Regulierachse der Nivelliergruppe (GL) mit einer Bewegungsachse der Blockiergruppe (GB) zusammenfällt.

6. Vorrichtung nach einem der Ansprüche 1 bis 5, **dadurch gekennzeichnet, dass** die Nivelliergruppe (GL) und die Blockiergruppe (GB) in dem Gehäuse (39, 40, 39', 40') angeordnet sind.

7. Vorrichtung nach Anspruch 6, **dadurch gekennzeichnet, dass** sich ein Zahnkranz (43) des Kegelrads in eine Gewindeschraube (44) erstreckt, die ihrerseits in einem Gewindeloch (46) axial zu und innerhalb der Madenschraube (35) angeordnet ist.

8. Vorrichtung nach Anspruch 1, **dadurch gekennzeichnet, dass** das zylindrische Element (94) einen Endabschnitt des Innengehäuses (39', 40') und die Madenschraube (35) zumindest teilweise umgibt.

9. Vorrichtung nach einem der Ansprüche 1 oder 8, **dadurch gekennzeichnet, dass** das zylindrische Element (94) oben eine obere Kopfverzahnung (87) bereitstellt, die von einem zweiten Loch (37') der ersten Platte oder Schulter (11) und von einem in einer Halbschale des Außengehäuses (39) positionierten Loch (42') aus erreicht werden kann.

10. Vorrichtung nach Anspruch 9, **dadurch gekennzeichnet, dass** die obere Kopfverzahnung (87) nicht nur von dem zweiten Loch (37') der ersten Platte oder Schulter (11) und von dem in der äußeren Halbschale (39) angeordneten Loch (42'), sondern auch von einer Nut (42") einer Halbschale des Innengehäuses (39') aus erreicht werden kann.

11. Vorrichtung nach einem der Ansprüche 1, 8 oder 9, **dadurch gekennzeichnet, dass** in dem Schenkel (82) ein Verdrehsicherungsmittel vorgesehen ist, das sich von der Madenschraube (35) aus erstreckt, und dass Schlitze (88) vorgesehen sind, die den Durchgang von mindestens einem Teil der Verbindungsgruppe (GC) ermöglichen.

## Revendications

1. Dispositif d'assemblage approprié pour un meuble comprenant au moins deux panneaux (11, 12), lesdits panneaux possédant un siège (S1, S2) et ledit dispositif d'assemblage comportant un élément de nivellement compact pour pièces de meubles et articles d'ameublement, en particulier entre un premier panneau (11), tel qu'un épaulement d'un meuble, et un second panneau (12), tel qu'un socle ou une étagère d'un meuble, qui doivent être rapprochés l'un de l'autre suivant une direction d'approche (d) afin d'amener le bord (B) d'un panneau en butée dans une position de serrage contre une surface (S) de l'autre panneau, ledit dispositif d'assemblage comprenant un groupe de blocage (GB) et un groupe de connexion (GC) assemblables sur lesdits panneaux (11, 12), **caractérisé en ce qu'**un groupe de nivellement (GL) est également pourvu, insérable à l'intérieur d'un même siège (S1) qui reçoit le groupe de blocage (GB), ledit siège (S1) étant contenu dans l'épaisseur (SP) du panneau (11) dans lequel le groupe de blocage (GB) est applicable, ledit siège (S1) s'étendant à partir d'un bord (B1) vers l'intérieur dudit panneau (11, 12) suivant un axe (x) qui est perpendiculaire à une direction d'approche (d) entre lesdits panneaux (11, 12), ledit groupe de blocage (GB) et ledit groupe de nivellement (GL) étant manœuvrables à travers deux trous distincts (42, 42') ;
le dispositif d'assemblage comprenant un boîtier (39', 40') et un second boîtier extérieur (39, 40) ;
ledit groupe de blocage (GB) comprenant un biseau de couronne à dents de pignon (41, 43), qui est logé dans ledit boîtier (39', 40') à l'intérieur dudit second boîtier externe (39, 40),
ledit second boîtier externe (39, 40) étant positionné dans ledit siège (S1) sous la forme d'un trou dudit épaulement (11), ledit biseau, qui est accessible depuis un premier trou d'orifice (37) dudit épaulement (11) et depuis un trou (42) d'une demi-coque (39) dudit boîtier, commandant le déplacement d'une vis sans tête (35) appropriée pour être en prise sur ledit groupe de connexion (GC) ;
ledit groupe de nivellement (GL) comprenant un pied (82) ;
ledit groupe de nivellement (GL) étant positionné dans ledit second boîtier externe (39, 40) et comprenant un élément cylindrique (94) pourvu d'un filetage interne (95) qui s'engage avec un filetage externe complémentaire (86) formé sur une extrémité externe supérieure dudit pied (82) s'étendant en direction d'un sol (P) ; et
ledit groupe de connexion (GC) comprenant une extrémité filetée (32), une douille à filetage interne (31) et une goupille (33), ladite goupille étant positionnée dans ladite extrémité filetée (32), dans ladite douille à filetage interne (31), agencée dans un trou ou le siège (S2) de ladite base (12), ladite goupille (33) fournissant, dans sa partie saillante, un logement (34) pour une vis sans tête de blocage (35) dudit groupe de blocage (GB).

2. Dispositif selon la revendication 1, **caractérisé en ce que** lesdits deux trous distincts (42, 42') sont réalisés dans lesdits boîtiers (39, 40, 39', 40').

3. Dispositif selon la revendication 1, **caractérisé en ce que** lesdits deux trous (42, 42') sont positionnés sur la même ligne verticale que le groupe de connexion (GC).

4. Dispositif selon la revendication 1, 2 ou 3, **caractérisé en ce que** ledit groupe de blocage (GB) et ledit groupe de nivellement (GL) peuvent être manœuvrés avec le même outil (57).

5. Dispositif selon l'une quelconque des revendications 1 à 4, **caractérisé en ce qu'**un axe de manœuvre (k) dudit groupe de blocage (GB) est perpendiculaire à un axe de régulation du groupe de nivellement (GL), ledit axe de régulation du groupe de nivellement (GL) coïncidant avec un axe de déplacement du groupe de blocage (GB).

6. Dispositif selon l'une quelconque des revendications 1 à 5, **caractérisé en ce que** ledit groupe de nivellement (GL) et ledit groupe de blocage (GB) sont positionnés dans le boîtier (39, 40, 39', 40').

7. Dispositif selon la revendication 6, **caractérisé en ce qu'**une couronne dentée (43) dudit biseau s'étend dans une vis filetée (44), qui à son tour est positionnée dans un trou fileté (46) axial par rapport à ladite vis sans tête (35) et à l'intérieur de celle-ci.

8. Dispositif selon la revendication 1, **caractérisé en ce que** ledit élément cylindrique (94) entoure au moins partiellement une partie d'extrémité dudit boîtier interne (39', 40') et de ladite vis sans tête (35).

9. Dispositif selon la revendication 1 ou 8, **caractérisé en ce que** ledit élément cylindrique (94) présente sur le dessus, une denture de tête supérieure (87) qui est accessible depuis un second trou (37') du premier panneau ou de l'épaulement (11) et depuis un trou (42') positionné dans une demi-coque du boîtier externe (39).

10. Dispositif selon la revendication 9, **caractérisé en ce que** ladite denture de tête supérieure (87) est accessible non seulement depuis ledit second trou (37') du premier panneau ou de l'épaulement (11) et depuis ledit trou (42') positionné dans la demi-coque externe (39), mais aussi depuis une gorge (42") d'une demi-coque dudit boîtier interne (39').

11. Dispositif selon la revendication 1, 8 ou 9, **caractérisé en ce que** des moyens anti-rotation sont pourvus dans ledit pied (82), qui s'étendent depuis la vis sans tête (35), et des fentes (88) sont pourvues pour permettre le passage d'au moins une partie du groupe de connexion (GC).
